# DEMANDE DE BREVET EUROPEEN

(11) **EP 1 974 887 A1**
(43) Date de publication de la demande: **01.10.2008**
(21) Numéro de dépôt: 08356054.0
(22) Date de dépôt: 21.03.2008
(51) Int. Cl.: B29C 45/16, B29C 45/04

(54) **Base tournante transformable associée à des moules d'injection de matières plastiques**

(30) Priorité: 30.03.2007 FR 0702340
(71) Demandeur: JP Grosfilley, 01100 Martignat (FR)
(72) Inventeur: Grosfilley, Jean Pierre, 01100 Martignat (FR)
(74) Mandataire: Bratel, Gérard

(57) **Abrégé**

La base tournante (1) comprend un corps (2) à monter sur le plateau mobile (3) d'une presse à injecter, et un arbre central cannelé (6a) mobile en rotation et en translation axiale, l'arbre cannelé (6a) étant accouplé à un mécanisme d'entraînement en rotation (7) logé dans le corps (2). L'extrémité de l'arbre cannelé peut recevoir directement la partie mobile tournante d'un moule d'injection. La base tournante (A) peut aussi être utilisée avec un plateau tournant (17) fixé à l'extrémité de l'arbre cannelé (6a), à faible distance du corps (2), et supportant la partie tournante (22) d'un moule d'injection (21) conçu pour un plateau tournant, le moule (21) étant plus particulièrement un moule de multi-injection.

## Description

La présente invention concerne, de façon générale, les outillages utilisés dans le domaine du moulage par injection des matières plastiques. Plus particulièrement, cette invention s'intéresse à une base tournante transformable associé à des moules d'injection de matières plastiques, encore plus particulièrement des moules de "multi-injection".

Les moules utilisés dans des procédés dits de "multi-injection", en particulier avec injection successive de deux ou plusieurs matières plastiques pour la constitution de certains produits, possèdent le plus souvent une partie fixe et une partie tournante avec empreintes, la partie tournante devant effectuer des rotations relativement à la partie fixe de manière à obtenir deux ou plusieurs positions angulaires relatives. Ainsi, l'injection d'une première matière est effectuée dans une position angulaire de la partie tournante, et l'injection d'au moins une deuxième matière est effectuée dans une autre position angulaire de la partie tournante. Il convient donc de prévoir, à cet effet, des mécanismes de support avec entraînement en rotation de moules ou de parties de moules, mécanismes qui eux-mêmes doivent prendre place sur des presses à injecter, en particulier sur les plateaux de ces presses.

Pour commander la rotation de la partie mobile d'un moule de multi-injection, un dispositif connu, et utilisé déjà depuis une cinquantaine d'années est le plateau tournant. Ce dispositif très courant offre l'avantage de conserver une relative simplicité de la conception du moule utilisé avec le plateau tournant.

Plus particulièrement, la construction d'un tel plateau tournant se présente sous la forme d'un disque rotatif, installé sur le plateau mobile de la presse à injecter. L'entraînement en rotation de ce disque est, le plus souvent, réalisé par un moteur hydraulique ou électrique, avec transmission du mouvement par un engrenage qui vient en prise avec une couronne dentée solidaire du disque rotatif. La régulation thermique de la partie mobile du moule, installée sur un tel plateau tournant, est assurée par une circulation de fluide, par exemple une circulation d'eau ou d'huile, passant par un raccord rotatif relié à l'arrière du plateau mobile de la presse à injecter.

Un autre dispositif, apparu plus récemment pour le support et la rotation de la partie mobile tournante d'un moule d'injection, est la "base tournante" qui a été notamment décrite dans le brevet français 9411922/2725152 au nom du demandeur.

La base tournante se présente comme un boîtier plat, fixé sur le plateau mobile de la presse à injecter. Un arbre cannelé traverse, en son centre, le plateau mobile de la presse et le corps de la base tournante, cet arbre cannelé étant monté mobile en rotation et en translation axiale. Le mouvement rotatif de l'arbre cannelé est imparti à cet arbre cannelé par un mécanisme d'entraînement en rotation logé à l'intérieur du corps de la base tournante. Le mouvement de translation axiale de l'arbre cannelé est, en général, imparti à cet arbre par la plaque d'éjection centrale de la presse à injecter.

Dans l'utilisation habituelle d'une telle base tournante, l'arbre cannelé traverse une partie mobile du moule qui ne tourne pas, et qui est fixée sur le corps de la base tournante. A l'extrémité de l'arbre cannelé qui est éloignée du plateau mobile de la presse, est aménagé un carré d'entraînement sur lequel est installée la partie mobile tournante du moule, celle-ci se situant en face de la partie fixe du moule, elle-même montée sur le plateau fixe de la presse à injecter. La conception des moules est adaptée à cette utilisation et, en particulier, la partie mobile tournante des moules est très souvent allégée, de manière à réduire le temps de rotation par diminution de l'inertie.

En complément de ses fonctions mécaniques, l'arbre cannelé de la base tournante permet l'arrivée des circuits de régulation thermique dans la partie rotative du moule, grâce à un raccord tournant situé sur cet arbre cannelé à l'arrière du plateau mobile de la presse à injecter, et à des canaux de fluide de refroidissement qui s'étendent axialement dans l'arbre cannelé lui-même.

La base tournante permet une grande variété d'applications en multi-injection, comparativement au plateau tournant précédemment évoqué.

Il est vrai que la solution de la base tournante et la solution du plateau tournant sont voisines l'une de l'autre, dans leur idée générale commune de transmettre un mouvement rotatif à un moule d'injection ou à une partie d'un tel moule. Cependant, dans le cas de la base tournante, un mouvement axial supplémentaire de la partie de moule montée rotative procure une cinématique différente pour le fonctionnement du moule. Par conséquent, les conceptions des moules à partie mobile tournante sont elles-mêmes différentes, selon qu'ils sont destinés à être utilisés avec un plateau tournant ou avec une base tournante, notamment pour l'adaptation sur l'un ou l'autre des deux systèmes rotatifs ici considérés.

Face à cette situation, l'objectif de la présente invention est de fournir un perfectionnement, partant du principe de la base tournante, qui offre la possibilité au mouleur d'accepter tous les types de moules rotatifs avec le même équipement, et en particulier de procurer à l'utilisateur de la base tournante la possibilité de produire avec des moules conçus à l'origine pour un plateau tournant, l'adaptation de la base tournante d'un type de moule à un autre pouvant être effectuée de manière simple et rapide.

A cet effet, l'invention a essentiellement pour objet une base tournante transformable associée à des moules d'injection de matières plastiques, plus particulièrement des moules de multi-injection avec partie mobile tournante, la base tournante comprenant un corps fixe en forme de boîtier plat, à monter sur un plateau mobile d'une presse à injecter, et un arbre central cannelé mobile en rotation et en translation axiale, cet arbre cannelé étant accouplé à un mécanisme d'entraînement en rotation logé à l'intérieur du corps de la base tournante, une extrémité de l'arbre cannelé étant apte à être attelée à des moyens d'éjection appartenant à la presse à injecter, tandis que l'autre extrémité de cet arbre cannelé est apte à recevoir une partie mobile tournante d'un moule d'injection, la base tournante étant ici prévue pour être utilisée aussi avec un plateau tournant et avec un moule de multi-injection à partie tournante conçu pour un plateau tournant, le plateau tournant en forme de disque se fixant à ladite autre extrémité d'un arbre cannelé de la base tournante, à faible distance de la face frontale du corps de la base tournante, et ce plateau tournant servant de support à la partie tournante du moule de multi-injection.

Ainsi, l'invention procure à l'utilisateur d'une base tournante la possibilité de produire des pièces avec des moules conçus à l'origine pour un plateau tournant, moyennant une transformation simple, rapide et économique de la base tournante, celle-ci pouvant rester en place sur la presse à injecter au cours de la transformation. Grâce à une telle adaptation de la base tournante, le mouleur possédant un savoir-faire avec les moules conçus pour un plateau tournant peut continuer de produire des pièces moulées sans changer ses habitudes, tout en bénéficiant des avantages de la base tournante. De plus, en raison du caractère désormais universel de la base tournante dans ses applications, le client du mouleur peut choisir librement sa conception de moule.

En particulier, pour l'utilisation de la base tournante avec un plateau tournant, cette base tournante sera en règle générale équipée d'un arbre cannelé plus court que l'arbre cannelé utilisé sans le plateau tournant, autrement dit dans l'utilisation habituelle de la base tournante. Ainsi, la transformation de cette base tournante consistera essentiellement à retirer l'arbre cannelé et à le remplacer par un arbre cannelé plus court, spécifique au plateau tournant, sur lequel sera fixé le plateau tournant. Avantageusement, le plateau tournant sera alors fixé à l'extrémité de cet arbre cannelé par le "dessus", c'est-à-dire par la face dudit plateau tournant orientée vers l'emplacement du moule, ce qui facilite encore la transformation.

Bien entendu, la transformation inverse, c'est-à-dire de l'utilisation avec plateau tournant à l'utilisation habituelle de la base tournante, est possible et réalisable tout aussi facilement et rapidement.

A cet égard, on notera que la commande de rotation et le cas échéant de translation axiale de l'arbre cannelé reste la même dans les deux utilisations. De même, le raccord tournant situé à l'arrière de l'arbre cannelé, pour l'arrivée des circuits de régulation thermique dirigés vers la partie tournante du moule, est commun aux deux utilisations.

Dans le cadre de l'invention, on doit encore considérer que la base tournante est, le plus souvent, utilisée sur une presse à injecter avec son axe central orienté horizontalement. Dans ce contexte, il est de préférence prévu sur la face frontale du corps de la base tournante, au moins pour l'utilisation avec un plateau tournant, des galets de soutien du plateau tournant situés dans la zone basse de la base tournante, et des butées de retenue montées en différentes positions hors de la zone des galets de soutien, les galets de soutien et les butées de retenue coopérant avec la périphérie du plateau tournant. Les galets de soutien et les butées de retenue complètent ainsi l'équipement de la base tournante pour son utilisation avec un plateau tournant.

Enfin, l'adaptation de la base tournante peut encore comporter, au moins dans l'utilisation avec un plateau tournant, des moyens de poussée tels que des patins montés sur des ressorts, ou des vérins, qui sont interposés entre le corps de la base tournante et le plateau tournant, et qui sont aptes à écarter au moins légèrement ledit plateau du corps de la base tournante pour sa rotation, en évitant ainsi les frottements du plateau sur le corps de la base tournante lors de la rotation de ce plateau.

L'invention sera mieux comprise à l'aide de la description qui suit, en référence au dessin schématique annexé représentant, à titre d'exemple, une forme d'exécution de cette base tournante transformable associée à des moules d'injection de matières plastiques, plus particulièrement des moules de multi-injection :
Figure 1 est une vue en coupe d'une base tournante conforme à la présente invention, utilisée d'une manière habituelle ;
Figure 2 est une vue de face suivant la flèche F de la base tournante et de la partie mobile tournante d'un moule, dans l'utilisation selon la figure 1 ;
Figure 3 est une vue en coupe similaire à la figure 1, mais montrant cette base tournante utilisée avec un plateau tournant ;
Figure 4 est une vue de face similaire à la figure 2, mais correspondant à l'utilisation de la base tournante avec un plateau tournant selon la figure 3.

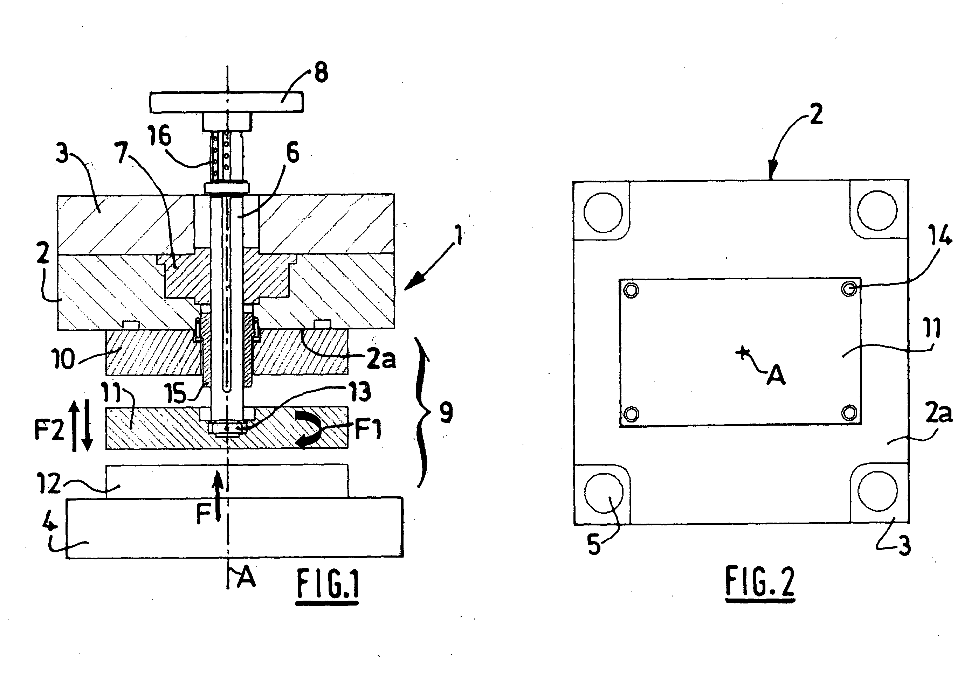

En se référant aux figures 1 et 2, il est montré une base tournante, désignée dans son ensemble par la référence numérique 1, qui comprend un corps fixe (non tournant) 2 monté sur un plateau mobile 3 d'une presse à injecter, celle-ci comprenant aussi un plateau fixe 4 et des colonnes de guidage 5.

Le corps fixe 2 de la base tournante 1 présente la forme d'un boîtier plat, de forme générale carrée échancrée à ses quatre angles pour laisser le passage aux colonnes de guidage 5 appartenant à la presse. Un arbre cannelé 6 traverse en son centre le corps de la base tournante 1, suivant l'axe central A de cette base tournante 1. L'arbre cannelé 6 est monté mobile en rotation autour de l'axe central A, et il est aussi monté mobile en translation suivant cet axe A. Cet arbre cannelé 6 est accouplé à un mécanisme d'entraînement en rotation 7, logé à l'intérieur du corps 2 de la base tournante 1.

L'arbre cannelé 6 traverse librement le plateau mobile 3 de la presse à injecter, et son extrémité arrière opposée à l'emplacement du moule est attelée à la plaque d'éjection centrale 8 de la presse à injecter.

Le moule d'injection 9, utilisé ici avec la base tournante 1, comprend une partie mobile non tournante 10, une partie mobile tournante 11 et une partie fixe 12. La partie mobile non tournante 10 du moule 9 est fixée sur le corps 2 de la base tournante 1. La partie mobile tournante 11 du moule 9 est fixée à l'extrémité avant de l'arbre cannelé 6, la fixation étant ici faite en 13 par le "dessous" c'est-à-dire par la face de la partie mobile tournante 11 orientée en regard de la partie mobile non tournante 10. La partie fixe 12 du moule 9 est montée sur le plateau fixe 4 de la presse à injecter. La figure 2 fait encore apparaître des colonnes de guidage 14 appartenant au moule 9.

L'arbre cannelé 6 traverse de part en part la partie mobile non tournante 10 du moule 9 en étant guidé, en rotation et en translation suivant l'axe central A, par un palier central 15. La partie arrière de l'arbre cannelé 6, proche de la plaque d'éjection 8 de la presse, comporte un raccord rotatif 16 permettant l'arrivée des circuits de régulation thermique de la partie mobile tournante 11 du moule 9.

Grâce à la base tournante 1, et en particulier aux mouvements de rotation et de translation imprimés à l'arbre cannelé 6, la partie mobile tournante 11 du moule 9 peut, au cours de l'utilisation de la presse à injecter, décrire un mouvement de rotation autour de l'axe central A, suivant la flèche F1, et un mouvement de translation parallèle à cet axe A, suivant la double flèche F2.

La description donnée jusqu'ici correspond à l'utilisation habituelle de la base tournante 1, telle qu'elle est déjà divulguée, par exemple, dans le brevet français 9411922/2725152 au nom du demandeur.

En se référant maintenant aux figures suivantes 3 et 4, il est montré l'utilisation de la même base tournante 1, convenablement adaptée, avec un plateau tournant 17.

Dans cette utilisation, le corps 2 de la base tournante 1 est, comme précédemment, monté sur le plateau mobile 3 de la presse à injecter. L'arbre cannelé 6 de la base tournante 1 est remplacé par un arbre cannelé 6a plus court, qui comporte encore un raccord tournant 16 dans sa partie arrière, à proximité de la plaque d'éjection centrale 8 de la presse.

Le plateau tournant 17, en forme de disque de relativement faible épaisseur, est fixé à l'extrémité avant de l'arbre cannelé 6a, la fixation étant ici faite en 17a par le "dessus" c'est-à-dire par la face du plateau tournant 17 orientée vers l'emplacement du moule.

Sur le corps 2 de la base tournante 1 sont fixés deux galets de soutien 18, sur lesquels s'appuie la périphérie 17b du plateau tournant 17, les galets 18 étant situées sur le côté de la base tournante 1 qui, en utilisation, est le côté situé en bas. Plusieurs butées de retenue 19 sont aussi fixées en différentes positions sur le corps 2 de la base tournante 1, pour retenir en autant de points le plateau tournant 17 par sa périphérie 17b, dans des zones plus ou moins éloignées des galets de soutien 18.

Le plateau tournant 17 est ainsi positionné pratiquement contre la face frontale 2a du corps 2 de la base tournante 1. Toutefois, pour éviter tout frottement du plateau tournant 17 contre ledit corps 2, des patins par exemple en bronze, montés sur des ressorts 20, sont interposés entre ce corps 2 et le plateau tournant 16.

Le moule de multi-injection 21, utilisé ici avec la base tournante 1 équipée du plateau tournant 17, comprend une partie mobile 22 réalisée d'un seul tenant et rendue tournante par son montage sur le plateau tournant 17. Ce moule 21 comprend aussi une partie fixe 23, montée sur le plateau fixe 4 de la presse à injecter.

Grâce à la base tournante 1, et en particulier aux mouvements de rotation impartis à l'arbre cannelé 6a par le mécanisme interne d'entraînement en rotation 7 de cette base tournante 1, le plateau tournant 17 peut être entraîné en rotation, et peut entraîner alors lui-même en rotation la partie mobile 22 du moule 21 autour de l'axe central A, comme indiqué par une flèche F3. Un léger déplacement axial de l'arbre cannelé 6a est envisageable, pour éviter le frottement du plateau tournant 17 contre la face frontale 2a du corps 2 de la base tournante 1, lors de la rotation de ce plateau tournant 17.

On notera que, pour l'éjection des pièces moulées, le plateau tournant 17 est classiquement aménagé (d'une manière non représentée) avec des trous permettant le passage de barres d'éjection actionnées par la presse à injecter, le rappel des éjecteurs dans le moule étant réalisé le plus souvent au moyen de ressorts. Cette conception classique relative à l'éjection peut être ici conservée, ou en variante la fonction d'éjection peut être réalisée par des vérins spécifiques logés dans le corps 2 de la base tournante 1.

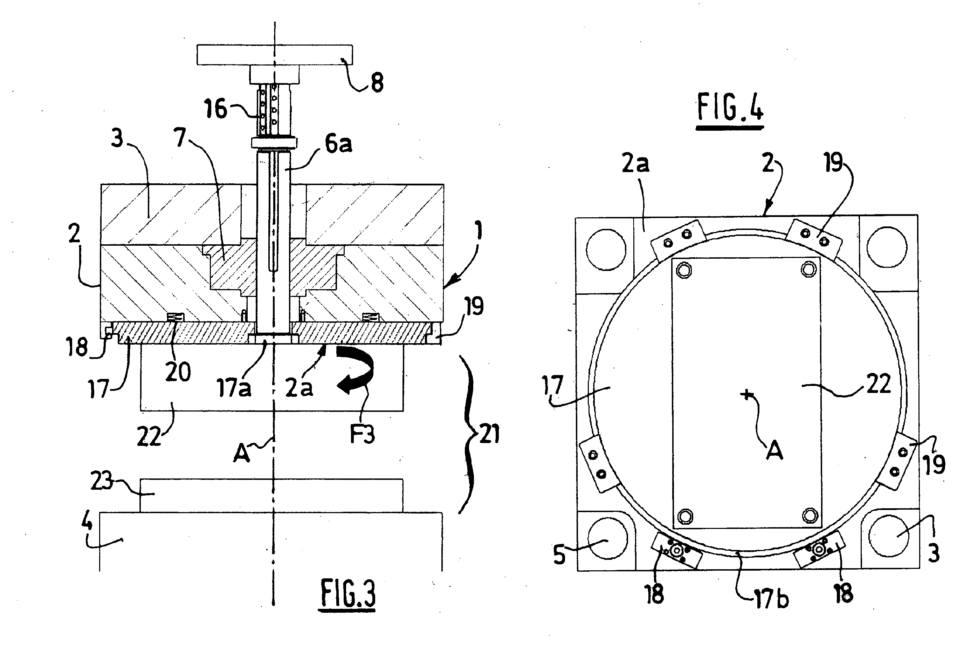

Comme on le comprend aisément, pour le passage de l'utilisation habituelle de la base tournante 1, selon les figures 1 et 2, à l'utilisation avec un plateau tournant 17 selon les figures 3 et 4, il suffit de procéder aux opérations suivantes :
- extraction de l'arbre cannelé 6 et remplacement de celui-ci par l'arbre plus court 6a ;
- installation du plateau tournant 17 sur la face frontale 2a du corps 2 de la base tournante 1 ;
- fixation du plateau tournant 17 sur l'extrémité de l'arbre cannelé 6a, la fixation ici réalisée par le "dessus" rendant l'opération aisée, notamment du point de vue de la commodité d'accès et de montage ;
- mise en place des galets de soutien 18 et des butées de retenue 19 sur le corps 2 de la base tournante 1, grâce à des trous de fixation préexistants (ou à réaliser sur une base tournante initialement non aménagée) ;
- remise en place du même raccord rotatif 16 à l'arrière de l'arbre cannelé 6a.

### (L'énumération précédente ne préjugeant pas de l'ordre de succession des opérations)

Les opérations inverses permettent, bien entendu, de repasser de l'utilisation avec plateau tournant 17 à l'utilisation habituelle de la base tournante 1. Toutes ces opérations de transformation de la base tournante 1 sont réalisables sans démonter le corps fixe 2 de la base tournante 1, c'est-à-dire en laissant ce corps 2 en place sur le plateau mobile 3 de la presse à injecter.

L'on ne s'éloignerait pas du cadre de l'invention, telle que définie dans les revendications annexées, quels que soient notamment :
- les détails constructifs de la base tournante et de ses aménagements, par exemple le nombre des galets de soutien et des butées de retenue du plateau tournant ;
- le mode d'utilisation de cette base tournante, notamment son orientation en cours d'utilisation, selon les caractéristiques de la presse à injecter ;
- la finalité des mouvements de rotation et de translation de ladite base tournante, en fonction des caractéristiques des moules d'injection ;
- la nature des opérations d'injection de matières plastiques ou similaires réalisables avec une telle base tournante : injection "bi-matière" ou "multi-matière", injection multicouche, surmoulage, injection avec insert ou avec assemblage, injection-soufflage, etc.

## Revendications

1. Base tournante transformable associée à des moules d'injection de matières plastiques, plus particulièrement, des moules de multi-injection avec partie mobile tournante, la base tournante (1) comprenant un corps fixe (2) en forme de boîtier plat, à monter sur un plateau mobile (3) d'une presse à injecter, et un arbre central cannelé (6) mobile en rotation et en translation axiale, cet arbre cannelé (6) étant accouplé à un mécanisme d'entraînement en rotation (7) logé à l'intérieur du corps (2) de la base tournante (1), une extrémité de l'arbre cannelé (6) étant apte à être attelée à des moyens d'éjection (8) appartenant à la presse à injecter, tandis que l'autre extrémité de cet arbre cannelé (6) est apte à recevoir une partie mobile tournante (11) d'un moule d'injection (9), **caractérisée en ce qu'**elle est prévue pour être utilisée aussi avec un plateau tournant (17) et avec un moule de multi-injection (21) à partie tournante (22) conçu pour un plateau tournant, le plateau tournant (17) en forme de disque se fixant à ladite autre extrémité d'un arbre cannelé (6a) de la base tournante, à faible distance de la face frontale (2a) du corps (2) de la base tournante (1), et ce plateau tournant (17) servant de support à la partie tournante (22) du moule de multi-injection (21).

2. Base tournante transformable selon la revendication 1, **caractérisée en ce que**, pour l'utilisation avec un plateau tournant (17), cette base tournante (1) est équipée d'un arbre cannelé (6a) plus court que l'arbre cannelé (6) utilisé sans le plateau tournant (17).

3. Base tournante transformable selon la revendication 1 ou 2, **caractérisée en ce que** le plateau tournant (17) est fixé à ladite autre extrémité de l'arbre cannelé (6a) par le "dessus", c'est-à-dire par la face du plateau tournant (17) orientée vers l'emplacement du moule (21).

4. Base tournante transformable selon l'une des revendications 1 à 3, **caractérisée en ce que**, cette base tournante (1) étant utilisée sur une presse à injecter avec son axe central (A) orienté horizontalement, il est prévu sur la face frontale (2a) du corps (2) de ladite base tournante (1), au moins pour l'utilisation avec un plateau tournant (17), des galets de soutien (18) du plateau tournant (17) situés dans la zone basse de la base tournante (1), et des butées de retenue (19) montées en différentes positions hors de la zone des galets de soutien (18), les galets de soutien (18) et les butées de retenue (19) coopérant avec la périphérie (17b) du plateau tournant (17)

5. Base tournante transformable selon l'une des revendications 1 à 4, **caractérisée en ce que** sont prévus, au moins dans l'utilisation avec un plateau tournant (17), des moyens de poussée (20) tels que des patins montés sur des ressorts (20), ou des vérins, qui sont interposés entre le corps (2) de la base tournante et le plateau tournant (17), et sont aptes à écarter au moins légèrement ledit plateau (17) du corps (2) de la base tournante (1) pour sa rotation.
